# DEMANDE DE BREVET EUROPEEN

(11) **EP 2 824 800 A1**
(43) Date de publication de la demande: **14.01.2015**
(21) Numéro de dépôt: 14175499.4
(22) Date de dépôt: 03.07.2014
(51) Int. Cl.: H02K 1/27, H02K 1/28

(54) **Corps de rotor à aimants permanents et machine électrique tournante comportant un tel corps**

(30) Priorité: 04.07.2013 FR 1356547
(71) Demandeur: VALEO EQUIPEMENTS ELECTRIQUES MOTEUR, 94046 Créteil Cedex (FR)
(72) Inventeur: EL BARAKA, Khadija, 77600 BUSSY ST GEORGES (FR); JUGOVIC, Svetislav, 91260 JUVISY-SUR-ORGE (FR)
(74) Mandataire: Ribeil, Alexandre

(57) **Abrégé**

Le corps de rotor (11) de machine électrique tournante comporte un premier flasque (13) portant un épaulement (15) en matière amagnétique un second flasque (14) en matière amagnétique , une partie magnétique (102) portée par une âme centrale (12) en étant implantée axialement entre l'épaulement (15) et le second flasque (14), des aimants permanents (114) montés dans logements radiaux (113) ménagés dans la partie magnétique (102), des moyens élastiques à action axiale (21) portés par le second flasque (14), des trous alignés (109) réalisés dans le premier épaulement (15), dans les bras (102) et dans le second flasque de pression (14) pour passage d'organes de fixation (209) pour serrage de la partie magnétique (102) entre le premier épaulement (15) et le second flasque de pression (14).

La machine électrique tournante comporte un tel corps de rotor.

## Description

### Domaine de l'invention

La présente invention concerne un corps de rotor à aimants permanents et une machine électrique tournante, notamment un alternateur et/ou un moteur électrique pour véhicule automobile, comportant un tel corps.

### Etat de la technique

Ainsi qu'on le sait une machine électrique tournante - telle qu'un alternateur, un alternateur réversible appelé alterno-démarreur ou un moteur électrique - comporte un stator entourant un rotor présentant un corps, tel qu'un paquet de tôles, solidaire d'un arbre de rotor.

Le stator comporte un corps, tel qu'un paquet de tôles, portant un bobinage s'étendant de part et d'autre du corps du stator. Le bobinage du stator peut comporter plusieurs enroulements montés en étoile ou en triangle pour formation d'un bobinage polyphasé, par exemple du type triphasé, pentaphasé ou hexaphasé. Un pont redresseur de courant alternatif en courant continu, par exemple un pont de diodes pour formation d'un alternateur, ou un onduleur, par exemple un pont à transistors du type Mosfet pour formation d'un alternateur ou d'un moteur électrique, est associé aux enroulements du bobinage du stator.

Un entrefer est présent entre la périphérie interne du corps du stator et la périphérie externe du paquet de tôles du rotor.

Une telle machine électrique est décrite par exemple dans le document WO 02/054566 auquel on se reportera pour plus de précisions. Dans ce document la machine est à ventilation interne et l'arbre de rotor est entraîné par le moteur thermique du véhicule automobile via un dispositif de transmission de mouvement comportant au moins une courroie. La machine électrique pourra être réversible et constituer un alterno-démarreur fonctionnant en mode alternateur lorsque l'arbre du rotor est menant et en mode moteur électrique pour entraîner en rotation l'arbre de rotor.

Le rotor comporte un corps de rotor à pôles saillants portant des bobinages et des aimants permanents. L'arbre de rotor porte un collecteur à bagues électriquement conductrices pour alimentation électrique des bobinages. En outre il est prévu des balais pour frotter sur les bagues collectrices afin d'alimenter électriquement celles-ci. Les aimants sont enterrés axialement dans le paquet de tôles du corps du rotor en étant d'orientation axiale par rapport à l'axe de symétrie axiale de l'arbre de rotor.

Plus précisément le corps du rotor présente une partie magnétique en forme de paquet de tôles intercalée entre un premier flasque et un second flasque. La partie magnétique est portée par une âme centrale constituée par la périphérie interne de la partie magnétique trouée centralement pour sa liaison en rotation à l'arbre de rotor moletée pour son emmanchement à force dans l'âme centrale.

Ce type de machine donne satisfaction.

Néanmoins il peut être souhaitable de réduire les coûts et de simplifier la machine électrique.

### Objet de l'invention

La présente invention a pour objet de répondre à ces souhaits.

Un des buts de l'invention est de réduire les coûts de la machine électrique tournante sans diminuer les performances de celle-ci.

Selon l'invention le corps du rotor comporte :
- un premier flasque de support portant un premier épaulement en matière amagnétique,
- un second flasque de pression en matière amagnétique ;
- une partie magnétique intercalée entre le premier flasque et le second flasque ;
- une âme centrale portant la partie magnétique ;
- des logements radiaux ménagés dans la partie magnétique ;
- des aimants permanents montés dans les logements radiaux de la partie magnétique ;
- des moyens élastiques à action axiale portés par le second flasque pour action sur les aimants ;
- des trous alignés réalisés dans le premier épaulement, dans la partie magnétique et dans le second flasque de pression pour passage d'organes de fixation - tels que de rivets, des boulons, des vis ou des goujons- pour serrage de la partie magnétique entre le premier épaulement et le second flasque de pression.

Grâce à l'invention on supprime le bobinage usuellement en cuivre du rotor de l'art antérieur, ainsi que les bagues collectrices et les balais ce qui permet de réduire les l'encombrement axial ainsi que le nombre de pièces et la masse de cuivre.

En outre on ne diminue pas les performances de la machine électrique car on augmente le nombre d'aimants permanents du fait que l'on implante ceux-ci dans les logements radiaux de la partie magnétique.

De plus grâce à la présence des moyens élastiques à action axiale on peut augmenter les tolérances de fabrication des aimants, lesdits moyens élastiques rattrapant les jeux axiaux. Les aimants peuvent donc être plus courts que la distance axiale séparant le deuxième flasque du premier épaulement après montage des organes de fixation.

On appréciera que le second flasque est de forme simple et constitue un flasque de pression, qui permet d'obtenir un bon serrage de la partie magnétique entre le second flasque et le premier épaulement. On notera que les aimants sont ménagés car ils sont soumis à l'action des moyens élastiques à action axiale.

Le nombre des pièces est également réduit car la solution selon l'invention fait appel à deux flasques du fait de l'absence de bobinage au niveau du rotor.

Selon les applications on peut donc, pour un même diamètre intérieur et un même diamètre extérieur de la partie magnétique du rotor, réduire l'encombrement axial du fait que l'on peut implanter un grand nombre d'aimant. La réduction de l'encombrement axial du corps du rotor permet également de réduire la longueur axiale du corps du stator ainsi que la masse du bobinage, usuellement en cuivre, porté par le corps du stator ce qui permet également de réduire les coûts de la machine électrique tournante.

Selon d'autres applications pour un même diamètre extérieur de la partie magnétique du rotor on peut augmenter le diamètre interne du corps du rotor et donc, en se reportant au document FR 2 830 589, augmenter la taille radiale du dispositif de débrayage ainsi que celle du palier, tel qu'un roulement à billes, ce qui permet d'augmenter la durée de vie de la machine électrique tournante.

La solution selon l'invention est simple et économique et permet de créer un corps de rotor manipulable et transportable.

Suivant l'invention une machine électrique tournante- telle qu'un alternateur, un alterno-démarreur ou un moteur électrique de véhicule automobile- est caractérisée en ce qu'elle comporte un tel corps de rotor.

Suivant d'autres caractéristiques prises isolément ou en combinaison :
- les moyens élastiques à action axiale consistent en des pattes élastiques découpées dans le second flasque pour appui axial sur les aimants ;
- les pattes sont configurées pour appui local sur les aimants ;
- les pattes sont bombées pour appui local sur les aimants ;
- les pattes présentent des plis pour appui local sur les aimants ;
- les pattes s'étendent radialement vers l'intérieur ;
- les pattes s'étendent radialement vers l'extérieur ;
- le second flasque est moins épais que le premier flasque ;
- le second flasque est moins épais que l'âme centrale ;
- l'âme centrale appartient à la partie magnétique en constituant la périphérie interne de celle-ci;
- l'âme centrale appartient à un moyeu en matière amagnétique ;
- la partie magnétique est de forme annulaire et consiste en un paquet de tôles ;
- la partie magnétique comporte une pluralité de segments en forme de bras ;
- l'âme centrale consiste en un moyeu en matière amagnétique porté par le premier flasque et présentant une extrémité libre ;
- le second flasque de pression en matière amagnétique est monté sur l'extrémité libre du moyeu constituant l'âme centrale;
- les bras en matière magnétique sont globalement d'orientation radiale et séparés les uns des autres par des fentes en étant implantés axialement entre le premier épaulement et le second flasque ;
- les aimants permanents sont montés dans les fentes séparant deux à deux les bras et délimitant avec le moyeu des logements radiaux de montage des aimants,
- le premier épaulement appartient au premier flasque ;
- le premier flasque est un seul tenant avec le moyeu constituant l'âme centrale ;
- le premier flasque est en matériau magnétique ;
- le premier épaulement appartient au moyeu ;
- le moyeu est rapporté sur le premier flasque ;
- le moyeu est rapporté par soudage, notamment du type laser, sur le premier flasque ;
- le moyeu est rapporté par sertissage sur le premier flasque ;
- le premier flasque comporte à sa périphérie externe une collerette configurée pour être fixée à l'un des composants d'un embrayage ;
- la collerette est décalée axialement en direction opposée par rapport aux bras et au premier épaulement ;
- le premier flasque est prolongé vers l'intérieur par un rebord de liaison en rotation à un arbre de rotor intermédiaire ;
- le rebord de fixation est troué pour sa fixation à l'aide d'organes de fixation, tels que des rivets, sur une collerette que présente l'arbre de rotor intermédiaire ;
- le rebord de fixation présente intérieurement des dents pour sa liaison à cannelures avec l'arbre de rotor intermédiaire ;
- l'âme centrale est configurée pour être liée en rotation à l'arbre de rotor, tel qu'un arbre menant ou mené par exemple l'arbre d'entrée de la boîte de vitesse du véhicule automobile ;
- le moyeu est configuré pour être lié en rotation à l'arbre de rotor, tel que l'arbre d'entrée de la boîte de vitesse ;
- les bras consistent en un empilement de bras élémentaires en tôle ;
- chaque bras présente à sa périphérie externe des rebords circonférentiels s'étendant de part et d'autre du bras ;
- une liaison mécanique intervient entre la périphérie interne des bras et le moyeu ;
- la liaison mécanique consiste en un serrage de la périphérie interne des bras sur la périphérie externe du moyeu :
- la liaison mécanique consiste en un emmanchement à force des bras sur le moyeu :
- la liaison mécanique est une liaison à coopérations de formes ;
- la liaison mécaniques est une liaison à cannelures ;
- la liaison mécanique est une liaison du type tenon mortaise ;
- la liaison mécanique est une liaison à que d'aronde ;
- les fentes, présentes entre deux bras adjacents, comportent en dessous des rebords circonférentiels des faces parallèles pour formation avec la périphérie externe du moyeu de logements radiaux de montage des aimants ;
- les aimants ont une section globalement rectangulaire ;
- les aimants sont en ferrite ;
- les aimants sont en terre rare, tels que des aimants en Néodyme-fer-Bore ;
- les aimants en ferrite appartiennent à des ensembles magnétiques comportant également au moins une partie amagnétique et /ou au moins un autre aimant ;
- des plaquettes souples, tel que des plaquettes en matière plastique de faible épaisseur, sont intercalées entre la périphérie interne des rebords circonférentiels et la périphérie externe des aimants ;
- les plaquettes sont collées sur la périphérie externe des aimants ;
- des moyens élastiques à action radiale sont implanté entre l'âme centrale et les aimants ;
- les moyens élastique à action radiale consistent en des ressorts de forme bombée ou avec au moins un pli pour contact local avec les aimants ;
- les ressorts présentent des plis pour contact local avec le moyeu ;
- les ressorts présentent une extrémité biseautée pour introduction sous les aimants ;
- l'extrémité biseautée est fendue ;
- les moyens élastiques à action radiale consistent en des languettes d'orientation axiale issues de la périphérie interne du second flasque ;
- le second flasque et le moyeu sont en inox ;
- les moyens élastiques sont en inox ;
- les flasques et le moyeu sont en aluminium ou en un alliage d'aluminium ;
- le premier flasque et le moyeu sont en fonte ;
- le second flasque porte une cible magnétique pour le suivit de la rotation du rotor.

La solution selon l'invention est simple et économique notamment du fait qu'elle fait appel à des bras créant moins de chute de matière que des anneaux. Elle permet de créer un corps de rotor manipulable et transportable.

D'autres avantages apparaîtront à la lecture de la description qui va suivre de manière non limitative et ce en regard des dessins annexés

### Brève description des dessins

- la figure 1 est une vue en perspective éclatée d'un corps de rotor de machine électrique tournante pour un premier mode de réalisation selon l'invention faisant intervenir des moyens élastiques à action axiale issus du second flasque pour action sur les aimants permanents ;
- la figure 2 consiste en une vue en perspective du corps du rotor de la figure 1 après assemblage des constituants de celui-ci ;
- la figure 3 est une vue partielle de face de la périphérie externe des bras équipées d'aimants permanents et de plaquettes souple de ménagement des aimants permanents ;
- la figure 4 est une vue en perspective de l'un des ressorts appartenant au moyen élastiques à action radiale intervenant entre la périphérie interne des aimants permanents et la périphérie externe du moyeu ;
- la figure 5 est une vue partielle en coupe montrant une patte élastique issue du second flasque et appartenant aux moyens élastiques à action axiale ;
- la figure 6 est une vue analogue à la figure 1 pour un second mode de réalisation comportant des moyens élastiques à action radiale issue de la périphérie interne du second flasque pour action sur les aimants permanents ;
- la figure 7 est une vue en perspective du second flasque du deuxième mode de réalisation de l'invention ;
- la figure 8 est une vue partielle en perspective du second flasque de la figure 7 vue de l'autre face de celui-ci.

Dans les figures les éléments identiques ou similaires seront affectés des mêmes signes de référence.

### Descriptions d'exemples de réalisation de l'invention

Dans les figures représentées le corps de rotor 11 pour machine électrique tournante est, pour réductions des coûts et de l'encombrement axial, dépourvu de bobinage et donc de bagues collectrices et de balais ce qui permet également de réduire le nombre de pièces et de simplifier le corps du rotor. Ce corps comporte des aimants permanents.

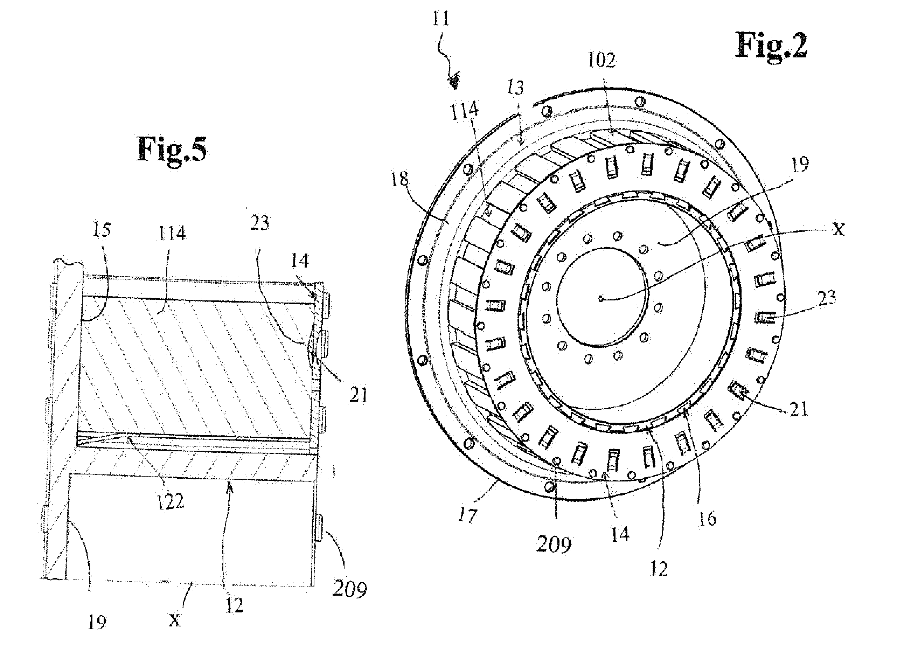

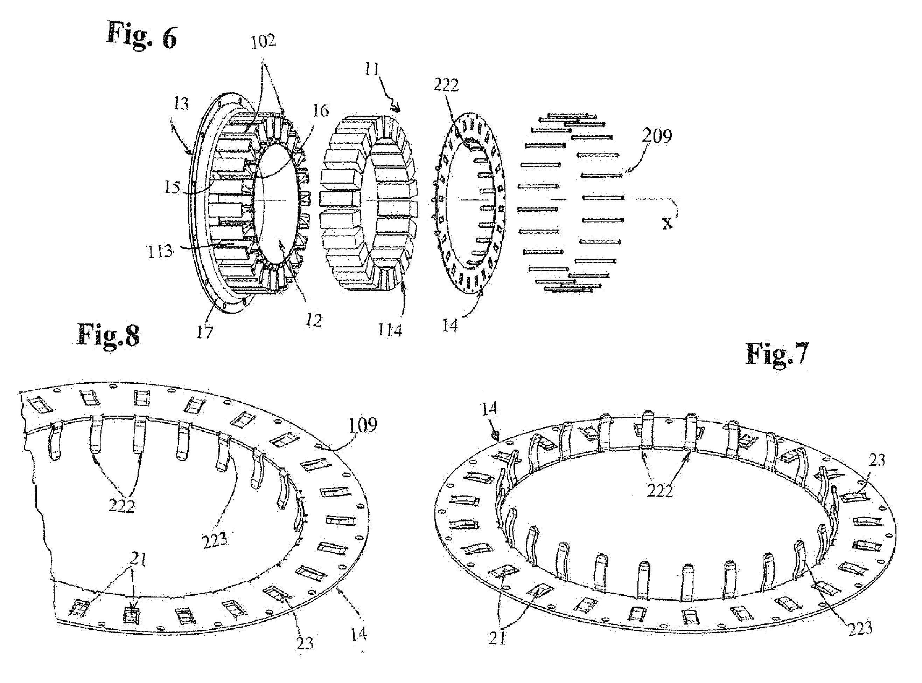

Le corps 11 présente centralement un axe de symétrie axiale X (Figures 2, 6). Les directions circonférentielle, radiale, transversale et axiale seront faites par rapport à cet axe X, qui constitue l'axe de rotation de l'arbre de rotor non représenté. Par matière magnétique on entend une matière apte à transmettre un flux magnétique, telle que de la matière ferromagnétique par exemple un paquet de tôles. Une matière amagnétique, telle que de l'inox, l'aluminium, de la matière plastique ou du laiton, par opposition à un matériau magnétique, est un mauvais conducteur de flux magnétique. Cette matière amagnétique pourra même empêcher toute transmission du flux magnétique. Elle réduit, voir élimine, les fuites magnétiques.

Ce corps 11 présente deux flasques 13, 14, une partie magnétique intercalée entre les deux flasques 13, 14 et une âme centrale de support de la partie magnétique.

La partie magnétique comporte des logements radiaux pour des aimants permanents notamment en ferrite.

La partie magnétique pourra être de forme annulaire et consister en un paquet de tôles. En variante la partie magnétique pourra comporter une pluralité de segments en forme de bras.

L'âme peut appartenir à la partie magnétique en constituant la périphérie interne continue de celle-ci.

En variante l'âme est constituée par un moyeu 12, de préférence en matière amagnétique ou faiblement magnétique, portant la partie magnétique.

L'un des flasques, dit premier flasque, pourra être configuré pour être lié en rotation à un arbre de rotor comme décrit par exemple dans le document FR 2 830 589, auquel on se reportera pour plus de précisions. Ce document décrit une machine électrique tournante implantée entre le vilebrequin du moteur thermique du véhicule automobile et l'arbre d'entrée la boîte de vitesse de celui-ci.

Plus précisément le rotor de cette machine électrique est solidaire en rotation d'un arbre de rotor constituant un arbre intermédiaire portant à l'avant un disque de friction appartenant à un premier embrayage, dont le plateau de réaction est solidaire du vilebrequin du moteur thermique du véhicule automobile. A l'arrière cet arbre est configuré pour être lié en rotation au plateau de réaction d'un second embrayage, dont le disque de friction est solidaire en rotation de l'arbre d'entré de la boîte de vitesse. Un palier est intercalé radialement entre la périphérie externe de l'extrémité arrière de l'arbre intermédiaire et la périphérie interne d'un flasque intercalé ente le premier embrayage et le rotor de la machine électrique. Pour ce faire le flasque appartient à un carter intercalé entre le carter du moteur thermique du véhicule et la cloche de la boîte de vitesse. Ce carter porte en partie le stator de la machine électrique. Le flasque présente à sa périphérie interne une portion interne annulaire inclinée portant à son extrémité libre une portée pour le palier, tel qu'un roulement. L'arbre intermédiaire traverse le dispositif de débrayage du premier embrayage. Ce dispositif est dans un mode de réalisation une butée autocentreuse à commande hydraulique. En variante le dispositif de débrayage est une butée autocentreuse à commande par câble. La butée est logée à l'intérieur de la portion interne du flasque.

Le rotor comporte un paquet de tôles porté par un moyeu solidaire du premier flasque constituant le plateau de réaction du deuxième embrayage.

Ce premier flasque, à la lumière de ce document, pourra comporter un rebord interne pour sa liaison en rotation à une collerette que présente l'arbre de rotor intermédiaire.

Dans un autre mode de réalisation le corps du rotor pourra être lié en rotation à l'arbre de rotor via son âme centrale appartenant à la partie magnétique comme décrit dans le document WO 02/ 054566 précité.

En variante le corps du rotor pourra être lié en rotation à l'arbre de rotor via son moyeu constituant l'âme centrale du corps du rotor.

Pour ce faire dans les deux cas l'arbre de rotor pourra être moleté pour son emmanchement à force dans l'alésage central de l'âme. L'arbre de rotor pourra être en matière amagnétique ou faiblement magnétique.

La périphérie externe de la partie magnétique 102 délimite l'entrefer avec la périphérie interne du corps du stator de la machine électrique tournante.

L'invention tire partie du deuxième flasque, qui pourra être moins épais que le premier flasque et l'âme centrale. Ce deuxième flasque est configuré pour rattraper les tolérances axiales de fabrication des aimants et ménager ceux-ci grâce à la présence de moyens élastiques à action axiale portés par le second flasque.

Plus précisément le corps du rotor 11 comporte :
- un premier flasque 13 de support portant un premier épaulement 15 en matière amagnétique,
- un second flasque de pression 14 en matière amagnétique ;
- une partie magnétique 102 intercalée entre le premier flasque 13 et le second flasque 14 ;
- une âme centrale 12 portant la partie magnétique 102 ;
- des logements radiaux 113 ménagés dans la partie magnétique 102 ;
- des aimants permanents 114 montés dans les logements radiaux 113 de la partie magnétique 102 ;
- des moyens élastiques à action axiale 21 portés par le second flasque 14 pour action sur les aimants 114 ;
- des trous alignés 109 réalisés dans le premier épaulement 15, dans la partie magnétique 102 et dans le second flasque 14 de pression pour passage d'organes de fixation 209 - tels que de rivets, des boulons, des vis ou des goujons- pour serrage de la partie magnétique 102 entre le premier épaulement 1 5et le second flasque de pression 14.

### Premier mode de réalisation

La partie magnétique du corps 11 est dans ce mode de réalisation segmentée et comporte une pluralité de bras radiaux 102 en matière magnétique. Les bras 102 sont dans les figures répartis circonférentiellement de manière régulière en étant séparés les uns des autres par des fentes. Ils consistent chacun en une pluralité de bras élémentaires en tôle empilés les uns sur les autres pour réduction des courant de Foucault. Ces tôles sont en matière ferromagnétique avec éventuellement un revêtement. Les tôles ont une faible épaisseur par exemple de 0,3 à 0,35 mm. Cette disposition permet de réduire les chutes de matière et est économique.

La périphérie externe des bras 102 délimite l'entrefer avec la périphérie interne du corps du stator de la machine électrique tournante.

Les bras 102, en forme de secteur annulaire, sont dotés chacun à leur périphérie externe de prolongements circonférentiels 105 s'étendant de part et d'autre de chaque bras 102. Les prolongements 105 limitent les fuites magnétiques entre deux bras adjacents, un jeu existant entre les prolongements 105, dirigés l'un vers l'autre, de deux bras adjacents 102. Le corps 11 du rotor est donc ouvert à sa périphérie externe et les fentes entre deux bras adjacents ont une largeur réduite à la périphérie externe des bras au niveau des prolongements 105. Radialement en dessous des prolongements 105, les faces latérales 112 en vis vis-à-vis de deux bras radiaux 105 sont dans ces modes de réalisations parallèles (Voir les figures).

Les fentes sont fermées intérieurement par un moyeu central 12 en matière amagnétique, telle que de l'inox ou de l'aluminium. Ce moyeu amagnétique 12, de forme annulaire et mauvais conducteur de flux magnétique, permet de minimiser voir d'annuler les fuites magnétiques au niveau de la périphérie interne des bras 102.

L'arbre de rotor (non visible dans les figures) pénètre à l'intérieur du moyeu 12.

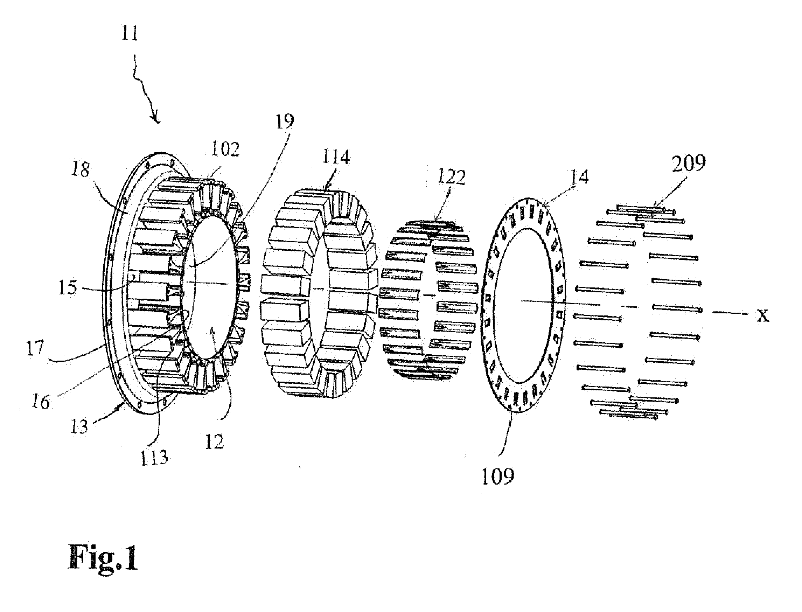

Les faces 112 en vis-à-vis de deux bras 102 adjacents délimitent avec les rebords 105 en vis-à-vis et le moyeu 12 des logements 113 (voir notamment figures 1 et 6) à faces latérales 112 parallèles pour le montage d'aimants permanents 114, qui sont en ferrite dans les exemples des réalisations. Ces aimants 114 résistent bien à la force centrifuge et sont économiques. Les aimants ont ici une forme globalement parallélépipédique. La section des aimants 114 est dans une réalisation de forme rectangulaire. Dans les modes de réalisation les arrêtes des aimants 114 sont arrondies, en variante chanfreinées de sorte qu'ils sont globalement de forme rectangulaire. La hauteur radiale des aimants 114 est dans ces modes de réalisation inférieure à leur longueur axiale. Les logements 113 sont d'orientation radiale. Ils sont circonférentiellement moins large que les bras radiaux 102. Les aimants 114 comportent chacun deux faces latérales définissant un pôle Nord et un pôle Sud. Pour un même bras 102 les deux faces 112 de celui-ci sont en vis-à-vis d'un même pôle des deux aimants encadrant ledit bras. Il est formé ainsi de manière circonférentielle et alternée des bras magnétiques Nord et des bras magnétiques Sud. On obtient ainsi un nombre élevé de pôles Nord et Sud dans un encombrement axial réduit.

Le nombre d'aimants 114 et de bras est ici de 24. Ce nombre dépend des applications.

De préférence le nombre des bras 102, de logements 113 et d'aimants 114 est égal au moins à 10. Les logements 113 borgnes sont délimités intérieurement par la périphérie externe du moyeu 12.

Grâce à ces dispositions on obtient une machine électrique tournante compacte axialement et puissante et ce de manière simple et économique.

Les bras 102 présentent des trous 109 pour le passage d'organes de fixation 209, qui pourront être en matière magnétique ou amagnétique. Les organes 209 pourront être métalliques et pourront consister en des vis, telles que des tirants, des goujons ou des boulons. Dans les modes de réalisations décrits les organes 209 consistent en des rivets.

Le corps 11 présente également un premier flasque 13 de support portant le moyeu 12 et un premier épaulement 15 pour les bras 102. Il est prévu également un deuxième flasque 14 en matière amagnétique telle que de l'inox. Le second flasque 14 est un flasque de pression de forme simple monté sur l'extrémité libre du moyeu 12 s'étendant axialement en porte à faux par rapport au premier flasque 13, qui est un flasque de support. Le second flasque 14 est de forme annulaire dont l'alésage interne est fonction du diamètre externe du moyeu 12 pour son montage par enfilage axial sur l'extrémité libre du moyeu 12.

Des trous (non référencés) sont prévus dans l'épaulement 15, porté par le premier flasque 13, et dans le second flasque 14. Ces trous sont alignés avec les trous 109 des bras 102 comme mieux visible dans les figures 1, 5 et 8. Ils permettent le passage des organes de fixations 209 et un serrage fiable des bras 102 entre l'épaulement 15 et le second flasque 14.

Les trous sont implantés à proximité de la périphérie externe des bras 102. Dans les figures les trous sont lisses car les organes de fixation 209 sont des rivets dont les têtes prennent appui sur la face externe du second flasque tournée à l'opposé des bras. Il en est des même lorsque les organes 209 sont des boulons. En variante les trous de l'épaulement 15 sont taraudés lorsque les organes de fixation consistent en des vis. L'épaulement 15 et les flasques 13, 14 sont globalement d'orientation transversale, tandis que le moyeu central 12 est d'orientation axiale. Le second flasque 14 est de forme annulaire.

L'épaulement 15 pourra appartenir au premier flasque 13, qui sera alors en matière amagnétique telle que de l'inox ou de l'aluminium voir de la fonte.

L'épaulement 15 pourra appartenir au moyeu 12 avantageusement en matière amagnétique. Le moyeu 12 pourra être d'un seul tenant avec le premier flasque 13 alors en matière amagnétique, par exemple par moulage. Dans ce cas le moyeu 12 et le premier flasque pourront être en aluminium, en alliage d'aluminium ou en fonte. Cette disposition permet de réduire le poids de la machine car le moyeu et le premier flasque sont en matière moins dense que celle de la partie magnétique ici fragmentée en bras 102.

En variante le moyeu 12 pourra être rapporté sur le premier flasque 13, par exemple par soudage notamment du type laser. Dans ce cas le premier flasque pourra être en matière magnétique et le moyeu en matière amagnétique. Ils pourront être chacun en acier ayant des propriétés magnétiques différentes. Toutes les combinaisons sont donc possibles sachant que l'épaulement 15 doit être en matière amagnétique. On notera que le nombre de pièces est réduit puisqu'il est fait appel à deux flasques et à un moyeu du fait que le corps 11 est dépourvu de bobinage.

On notera que les hauteurs radiales de l'épaulement 15 et du second flasque 14 dépendent de la hauteur radiale des bras 102 afin que ceux-ci prennent appui sur l'épaulement 15 et le second flasque 14. Le diamètre externe de l'épaulement 15 est ici globalement égal au diamètre externe des bras 102.

Une liaison mécanique 16 intervient entre la périphérie interne des bras 102 et la périphérie externe du moyeu 12.

Cette liaison pourra consister en un serrage de la périphérie interne des bras 102 sur la périphérie externe du moyeu par exemple par emmanchement à force ou frettage.

En variante la liaison mécanique 16 est à coopération de formes pour faciliter le montage des bras 102 sur le moyeu 12.

Cette liaison pourra être une liaison à cannelures.

Elle pourra être une liaison du type tenons mortaises, des tenons des bras pénétrant de manière complémentaire dans des rainures en forme de mortaise du moyeu 12. Par exemple les bras pourront présenter à leur périphérie interne des tenons de section rectangulaire engagés de manière complémentaire dans des rainures du moyeu 12.

Dans les figures cette liaison est du type à que d'aronde, des tenons globalement en forme de trapèze pénétrant dans des rainures complémentaires du moyeu.

Ce type de liaison résiste bien à l'action de la force centrifuge et est robuste te et fiable. La machine électrique tournante pourra tourner à une vitesse de rotation élevée.

Des moyens élastiques à action radiale 122 sont intercalés entre la périphérie interne des aimants 114 et la périphérie externe du moyeu 12. Les moyens élastiques 122 sont montés dans les logements 113 et sollicitent radialement les aimants 114 au contact des prolongements 105. Ils alternent circonférentiellement avec la liaison mécanique 16, plus précisément dans ces modes de réalisations des figures, avec les mortaises du moyeu.

Cela permet de rattraper les jeux radiaux et donc d'avoir des tolérances de fabrication plus larges pour le montage des aimants dans les logements 113. La solution est donc économique. En outre les moyens élastiques 122 permettent de réduire la taille radiale des aimants 114 et donc le volume de ceux-ci. Ces moyens élastiques sont circonférentiellement moins large que les logements 113. Ils sont avantageusement en matière amagnétique telle que de l'inox. La périphérie externe du moyeu 12, constituant le fond des logements 113, pourra être de forme circulaire ou plate pour appui des moyens élastiques à action radiale 122.

Dans les figures le premier flasque 13 comporte à sa périphérie externe une collerette 17 configurée pour être fixée à l'un des composants d'un embrayage comme décrit dans le document FR 2 830 589 précité. La collerette 17 est décalée axialement en direction opposée par rapport aux bras 102 et au premier épaulement 15. Cette collerette présente des trous (non référencés) pour sa fixation à l'aide d'organes de fixation, tels que des rivets, sur l'un des composants d'un embrayage tel que le plateau de réaction d'un embrayage à friction dont le disque de friction est lié en rotation de manière élastique à l'arbre d'entrée de la boîte de vitesse comme dans le document FR 2 830 589. En variante la collerette 17 est reliée à une rondelle de guidage d'un amortisseur de torsion, dont le moyeu est lié en rotation à l'arbre d'entrée d'une boîte de vitesse automatique.

La collerette 17 est reliée à la périphérie externe du premier épaulement 15 par une portion annulaire 18, qui dans les figures est inclinée.

Comme dans le document FR 2 830 589 le premier flasque 13 de support est prolongé radialement vers l'intérieur par un rebord interne de fixation 19 troué pour sa fixation à un arbre de rotor intermédiaire visible dans ce document FR 2 830 589. La fixation est réalisée par exemple à l'aide de rivets.

En variante ce rebord 19 présente des dents pour sa liaison en rotation par cannelures avec l'arbre intermédiaire. Dans tous les cas le rebord 19 est configuré pour être lié en rotation à l'arbre de rotor intermédiaire.

Ainsi qu'il ressort de ce qui précède le corps 11 se monte en lieu et place de celui du document FR 2 830 589. En considérant les figures de ce document pour le même diamètre intérieur et extérieur du paquet de tôles on voit que l'on réduit l'encombrement axial du corps du rotor ainsi que l'encombrement axial du corps du stator et donc la masse du bobinage porté par le corps du stator ce qui permet de réduire le coût de la machine électrique tournante. Pour un même diamètre extérieur du paquet de tôles on peut réduire le diamètre intérieur de celui-ci.

Dans tous les cas on peut augmenter le diamètre du dispositif de débrayage et le diamètre du palier ce qui permet d'augmenter la durée de vie de la machine électrique tournante.

Le moyeu 12 pourra être soudé sur le flasque 13 au niveau de la portion 18. En variante le moyeu 12 pourra être soudé sur le flasque 13 au niveau de son extrémité axiale opposée à son extrémité libre. En variante la périphérie interne du moyeu 12 pourra être soudée sur le premier flasque 13. Le soudage pourra être avantageusement un soudage du type laser, le laser pouvant pénétrer à l'intérieur du moyeu 12 et permettant un soudage par transparence. En variante le moyeu présente des pattes épaulées, qui traversent des ouvertures associées du premier flasque 13 pour liaison avec celui-ci par sertissage, les extrémités des pattes étant écrasées.

Le moyeu 12 et le flasque 13 pourront être en fonte de manière précitée.

Ainsi qu'il ressort des figures on forme d'abord l'ensemble premier flasque 13- moyeu12. Pui on monte les bras 102 sur cet ensemble. Ensuite on monte les aimants 114 puis les moyens élastiques 122. Enfin on enfile le deuxième flasque 14 sur l'extrémité libre du moyeu 12 en verrouillant le tout à l'aide des organes de fixation 209.

Le montage est simple.

Il ressort de ce qui précède et des figures que le corps 11 du rotor de machine électrique tournante selon ce premier mode de réalisation comporte :
- un premier flasque de support 13 portant un premier épaulement 15 en matière amagnétique,
- un moyeu 12 en matière amagnétique porté par le premier flasque et présentant une extrémité libre,
- un second flasque de pression 14 en matière amagnétique monté sur l'extrémité libre du moyeu,
- des bras 102 en matière magnétique globalement d'orientation radiale et séparés les uns des autres par des fentes en étant implantés axialement entre le premier épaulement et le second flasque,
- une liaison mécanique 16 intervenant entre la périphérie interne des bras et le moyeu,
- des aimants permanents 114 montés dans les fentes séparant deux à deux les bras et délimitant avec le moyeu des logements de montage des aimants,
- des moyens élastiques 122 à action radiale implanté entre le moyeu 12 et la périphérie interne des aimants 114,
- des trous 109 alignés réalisés dans le premier épaulement 15, dans les bras 102 et dans le second flasque 14 de pression pour passage d'organes de fixation 209 - tels que de rivets, des boulons, des vis ou des goujons- pour serrage des bras entre le premier épaulement et le second flasque de pression.

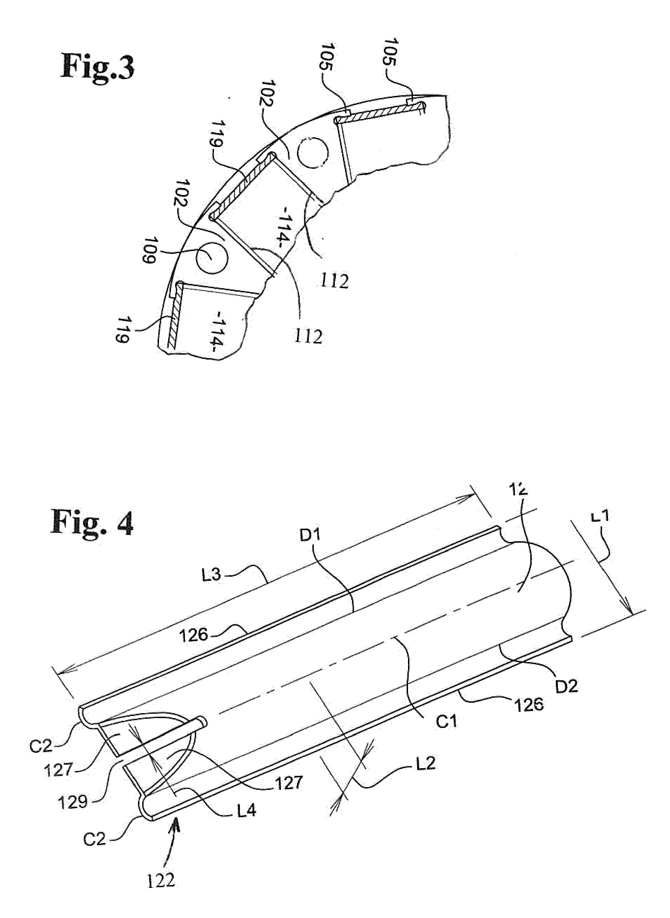

On notera, en référence à la figure 3, que des plaquettes souples 119, tel que des plaquettes en matière plastique de faible épaisseur, pourront être intercalées entre la périphérie interne des rebords circonférentiels 105 et la périphérie externe des aimants 114. Les plaquettes 119 sont plus souples que les aimants 114 et pourront être collées sur la périphérie externe des aimants. 114 afin d'augmenter encore la souplesse. Ces dispositions permettent d'éviter une rupture des aimants sous l'action de la force centrifuge.

Dans ce mode de réalisation les moyens élastiques à action radiale consistent en des ressorts 122 de forme bombée ou avec au moins un pli pour contact local avec les aimants 114.

Les ressorts 122 présentent dans cette réalisation des plis pour contact local avec la périphérie externe du moyeu 12 et la périphérie interne des aimants 114. Ces ressorts sont avantageusement en matière amagnétique, telle que de l'inox, pour réduire voir éliminer les fuites magnétiques.

Plus précisément les ressorts 122 présentent chacun un contact linéaire C1 avec l'un des éléments moyeu 12-aimant 114 contre lesquels est en appui le ressort 122 et deux contacts linéaire C2, C3 avec l'autre élément contre lequel est en appui le ressort 122.

Ces ressorts 122 comportent chacun une portion arrondie centrale et deux portions 126 arrondies d'extrémité situées de part et d'autre de la portion centrale 125. La portion centrale 125 arrondie et les portions d'extrémités arrondies 126 ont des courbures inversées. Chacun des ressorts 122 présente en outre une extrémité biseauté 127 suivant une direction longitudinale, ici axiale,

L'extrémité biseauté 127 comporte une fente 129 pour réduire la rigidité de l'extrémité biseautée 127 dirigée vers l'épaulement 15. Cette extrémité 127 facilite le montage par enfilage axial des ressorts entre les aimants 114 et le moyeu 12

Dans cette réalisation la portion centrale 125 est en contact avec la périphérie interne de l'aimant 114. Bien entendu il est possible de retourner le ressort; les portions 126 étant alors en contact avec la périphérie interne des aimants 114. La longueur axiale L3 des ressorts 122 est fonction de la longueur axiale entre l'épaulement 15 et le second flasque 14 une fois monté. La hauteur radiale ente l'aimant 114 et le moyeu 12 est inférieure à la hauteur radiale L2 du ressort 122 à l'état libre. La largeur circonférentielle L1 de chaque ressort 122 est inférieure à la longueur circonférentielle entre les deux faces parallèles 112 des logements 113. L1 est dans cet exemple supérieure à L2 et inférieure à L3.

Suivant une caractéristique le second flasque 14 porte des moyens élastiques à action axiale 21 pour action sur les aimants 114. Ces moyens élastiques à action axiale 21 consistent dans ce mode de réalisation en des pattes élastiques 21 découpées dans le second flasque 14 pour appui axial sur les aimants 114, plus précisément sur l'extrémité axiale des aimants 114 adjacente au second flasque 14, qui pourra être en inox. Ces pattes 21 sont bombées pour appui local sur les aimants 114. En variante les pattes 21 présentent un pli pour appui local sur les aimants 114.

Le découpage des pattes 21 fait apparaître des fenêtres fermées (Non référencées) globalement de forme rectangulaire implantées au voisinage de la périphérie externe du second flasque 14. Les pattes 21 présentent chacune une zone d'enracinement au niveau du bord supérieure de chaque fenêtre. Les pattes 21 sont dirigées radialement vers l'intérieur en direction de l'axe X et présentent une partie bombée 23, en variante un pli, pour appui local sur les aimants 114 de manière précitée. Ces pattes 21 sont globalement de même largeur circonférentielle que les aimants 114. Elles sont configurées pour ne pas interférer avec les bras 102. La partie bombée 23 s'étend entre la zone d'enracinement d'une patte 21 et l'extrémité libre de celle-ci.

A l'état libre la partie bombée 23 ou le pli s'étend en saillie axiale par rapport à la face arrière du second flasque tournée vers les bras 102.

Les pattes 21 radiales sont comprimées axialement après la fixation du second flasque 14 à l'aide des organes de fixation 209. Elles exercent ainsi via leur partie 23 une action axiale élastique sur les aimants 114 en appui sur l'épaulement 15 constituant un épaulement de réaction, les pattes 21 étant des pattes de pression.

Il est tiré partie du second flasque 14 qui exerce ainsi une fonction supplémentaire sans augmentation du nombre de pièces.

. En outre le second flasque permet de serrer les bras 102 et les aimants 114 de manière indépendante, la longueur axiale des aimants 114 étant globalement inférieure à celle des bras 102. Les pattes 21 permettent de rattraper les tolérances de fabrication des aimants 114, dont les tolérances de fabrication sont ainsi moins précises.

Grâce aux moyens élastiques à action axiale 122 et aux pattes 21 on peut supprimer les plaquettes 119 de sorte que la solution est moins couteuse.

Les plaquettes 119 sont donc optionnelles.

Il ressort de ce qui précède que les moyens élastiques à action axiale 122 pourront être moins épais que le second flasque 14.

### Deuxième mode de réalisation

Dans ce mode de réalisation les moyens élastiques à action axiale en forme de pattes 21 sont conservés. Ce second mode de réalisation se distingue du premier mode de réalisation par le fait que les moyens élastiques à action radiale sont modifiés.

Ces moyens élastiques à action radiale consistent en des languettes 222 issues de la périphérie interne du second flasque 14 par découpe et pliage. Ces languettes 22 sont d'orientation axiale. Elles sont configurées pour appui local sur les aimants 114 et sont moins large circonférentiellement que les aimants 114 pour ne pas interférer avec les bras 102. Ces languettes 222 constituent ainsi des ressorts à action radiale.

Elles ont une forme bombée 223 entre leur zone d'enracinement au second flasque et leur extrémité libre adjacente à l'épaulement 15 pour appui local sur la périphérie interne des aimants 114. Cette forme bombée se raccorde, d'une part, à l'extrémité libre de la languette par un pli (Non référencé) pour appui local sur le moyeu 12 et d'autre part, au second flasque 14 par un arrondi.

Ainsi, comme dans le premier mode de réalisation, la hauteur radiale ente l'aimant 114 et le moyeu 12 est inférieure à la hauteur radiale des languettes 222 à l'état libre.

Les languettes 222 sont obtenues par découpe et pliage axiale à partir de la partie centrale du second flasque 14 de forme annulaire.

Plus précisément cette partie centrale constitue dans les modes de réalisation précédents une chute de matière. Dans ce mode de réalisation les languettes 222 sont issues de cette chute de matière.

La solution est donc économique et tire partie du second flasque 14 pour réaliser encore une fonction supplémentaire permettant de réduire encore le nombre de pièces.

Comme dans le premier mode de réalisation, grâce aux moyens élastiques à action axiale 21 et aux languettes 222 on peut supprimer les plaquettes 119 de sorte que la solution est moins couteuse.

Les plaquettes 119 sont donc optionnelles.

On notera que la longueur axiale des languettes 222 est fonction du diamètre de l'alésage interne du second flasque 14. Ainsi dans ce mode de réalisation les languettes 222 sont plus courtes axialement que les aimants 114. Leur longueur axiale est dans ce mode de réalisation inférieure à la distance axiale entre le premier épaulement 15 et le second flasque 14.

Les moyens élastiques à action radiale sont donc plus court axialement que ceux des autres modes de réalisation ce qui permet de réduire les coûts et la consommation de matière.

Les tolérances de fabrication peuvent être plus grandes.

### Troisième forme de réalisation

Dans ce troisième mode de réalisation la partie magnétique consiste en un paquet de tôles de sorte que cette partie magnétique est continue à sa périphérie externe. Les logements radiaux 113 borgnes pourront être dépourvus de fentes à leur périphérie externe. En variante les logements 113 pourront être dotés de fentes de largeur réduite à leur périphérie externe avec présence de prolongement 105 comme dans le premier et le second mode de réalisation. L'âme centrale pourra être constituée par la périphérie interne de la partie magnétique. avantageusement des trous pourront être présents à la périphérie interne de la partie magnétique pour diminuer les fuites magnétiques. Ces trous pourront être implantés circonférentiellement entre deux aimants et/ ou radialement en dessous des aimants.

Les logements 113 pourront donc être délimités intérieurement par la périphérie externe de l'âme centrale et extérieurement par la périphérie externe de la partie magnétique intercalée entre le premier et le second flasque.

Le paquet de tôles pourra consister en un ensemble manipulable et transportable à la faveur d'organes de fixation supplémentaires, de préférence en matière amagnétique, traversant des trous alignés supplémentaires réalisés dans le paquet de tôles.

Le premier flasque 13 à rebord interne 19 pourra être conservé.

En variante le premier flasque 13 est dépourvu de rebord interne, l'arbre de rotor, avantageusement moleté, étant introduit à force dans l'alésage interne de l'âme centrale du corps du rotor. Ce premier flasque peut être dépourvu dans ce cas de collerette externe comme dans le document WO 02/054566 précité.

Bien entendu les moyens élastiques à action radiale 21 sont conservés ainsi que les moyens élastiques à action radiale, tels que les ressorts 122 ou les languettes 222, implantés entre l'âme centrale et la périphérie interne des aimants 114. Le paquet de tôles est serré axialement entre le premier épaulement et le second flasque, les trous 109 et les organes de fixation 209 étant conservés.

### Autres formes de réalisations

Dans les figures le rayon de la périphérie externe des bras 102 n'est pas constant pour diminution des bruits magnétiques et des vibrations. En variante le rayon de la périphérie externe des bras 102 est constant ainsi que l'entrefer entre le stator et le rotor de la machine électrique tournante. Cela est applicable au troisième mode de réalisation.

Dans les figures les prolongements 105 constituent des épaulements de retenu des aimants 114 et délimitent la largeur réduite des fentes étagées en largeur circonférentielle.

Dans les figures l'ensemble premier flasque 13- moyeu 12 présente une collerette 17 décalée axialement, qui constitue une collerette de protection de l'entrefer entre le rotor et le stator de la machine électrique tournante. Cette collerette empêche les saletés ou autres souillures de polluer l'entrefer.

En variante la périphérie externe du premier flasque 13 n'est pas décalée axialement par rapport à la partie courante du premier flasque 13 qui est ainsi d'orientation transversale.

En variante le premier flasque est dépourvu de rebord interne, l'arbre de rotor, avantageusement moleté, étant introduit à force dans l'alésage interne de l'âme centrale tel que le moyeu 12. Ce premier flasque peut être dépourvu dans ce cas de collerette externe comme dans le document WO 02/054566 précité.

En variante l'alésage interne de l'âme centrale, telle que le moyeu 12 est de forme tronconique et l'arbre de rotor a une forme tronconique complémentaire. Cet arbre de rotor pourra être en matière amagnétique ou faiblement magnétique.

Dans le premier et le second mode de réalisation le paquet de tôles pourra consister en un ensemble manipulable et transportable à la faveur d'organes de fixation supplémentaires, de préférence en matière amagnétique, traversant des trous alignés supplémentaires réalisés dans le paquet de tôles.

En variante les moyens élastiques à action axiale sont rapportés sur le second flasque 14. Ils consistent par exemple en une rondelle ondulée fixée sur le second flasque 14.

En variante les aimants appartiennent à un ensemble magnétique comportant un aimant et au moins une partie en matière amagnétique fixée, par exemple par collage, sur la périphérie interne de l'aimant ainsi de hauteur radiale réduite. Dans ce cas les moyens élastiques à action radiale agissent sur la portion amagnétique.

En variante les aimants 114 appartiennent à un ensemble magnétique comportant deux aimants réunis par collage. Ces aimants pourront ne pas être de même nature, l'un étant par exemple en ferrite et l'autre en terre rare. Bien entendu toutes les combinaisons sont possibles. Ainsi l'ensemble magnétique pourra comporter au moins un aimant en ferrite, un autre aimant et au moins une partie en matière amagnétique.

Dans une autre forme de réalisation plus coûteuse les aimants sont en terre rare, par exemple en Néodyme-Fer-Bore.

Grâce aux ensembles magnétiques on peut standardiser les aimants et en fonction des applications et de la taille des logements 113.

Dans un mode de réalisation on peut fixer, par exemple par collage, une cible magnétique, avantageusement dotée de pôles Nord et Sud, pour suivre la rotation du rotor de la machine électrique tournante, dont le carter est doté d'un porte capteur par exemple à effet Hall associé à la cible magnétique comme décrit dans le document FR 2 745 44 auquel on se reportera. En variante le moyeu 12 est rapporté sur le premier flasque par un soudage du type TIG.

Bien entendu on peut inverser les structures. Ainsi par exemple la partie bombée des languettes 222 pourra être en contact avec la périphérie externe du moyeu 12 et le pli de la languette 222 en contact avec la périphérie interne de l'aimant 114 concerné.

Ces languettes 222 pourront présenter des trous par exemple de forme ovale ou des frappes pour faciliter leur pliage.

Les pattes 21 pourront être dirigées radialement vers l'extérieur en étant issues du bord interne des fenêtres de forme globalement rectangulaire.

Les pattes 21 pourront comporter des plis pour contact locale avec les aimants.

Un ou des trous pourront être réalisés dans les pattes 21 ou les ressorts 122, 222 pour améliorer l'élasticité. La forme bombée pourra présenter une section en forme de U. Les plis pourront avoir une forme en V.

Dans un mode de réalisation dégradé les moyens élastiques à action radiale sont supprimés.

### Applications

La machine électrique tournante à corps de rotor 11 pourra être équipée d'un pont redresseur de courant alternatif en courant continu visible partiellement dans le document WO 02 / 054566. Elle consistera alors en un alternateur par exemple de véhicule automobile.

La machine électrique tournante à corps de rotor 11 pourra être dotée d'un onduleur comme décrit par exemple dans le document FR 2 745 444.

Dans ce cas elle pourra consister en un alterno-démarreur comme dans le document FR 2830589.

En variante on peut modifier l'alterno-démarreur de ce document FR 2 830 589 pour que le flasque portant le palier appartienne à un carter intercalé axialement entre le bloc moteur et la cloche de la boîte de vitesse de sorte que la machine électrique tournante appartienne à un module hybride comprenant la machine électrique tournante avec un corps de rotor selon l'invention, le dispositif de débrayage et un amortisseur de torsion solidaire du premier flasque 13 comme décrit dans la demande FR 12/58978 déposée le 25/09/2012, auquel on se reportera pour plus de précisions. Le premier flasque 13 pourra être en variante solidaire d'au moins une partie du plateau de réaction du deuxième embrayage dont le disque de friction est lié en rotation à l'arbre d'entrée de la boîte de vitesse visible dans le document FR 2 830 589. Le flasque 13 pourra donc appartenir dans un mode de réalisation au module hybride précité.

En variante le moyeu 12 pourra être solidaire de l'arbre d'entrée de la boîte de vitesse.

Bien entendu la présence du premier embrayage associé au vilebrequin du véhicule n'est pas obligatoire, l'arbre intermédiaire étant alors une prolongation du nez du vilebrequin du véhicule. Dans ce document le carter portant le stator pourra être refroidit par une circulation de fluide, tel que le fluide de refroidissement du véhicule.

Cet alterno-démarreur pourra appartenir à un prolongateur d'autonomie d'un véhicule électrique, le dit prolongateur comportant un moteur thermique associé à l'alterno-démarreur pour former un groupe électrogène afin de recharger les batteries du véhicule électrique.

L'alterno-démarreur pourra être entraîné en rotation par le moteur thermique du véhicule automobile via un dispositif de transmission à au moins une courroie et donc tourner plus vite de sorte que le corps du rotor pourra être équipé, si besoin est, des plaquettes 119.

Bien entendu avec un onduleur la machine électrique tournante à corps de rotor 11 pourra être un moteur électrique, tel qu'un moteur électrique d'un compresseur de climatisation par exemple du type « scroll » décrit dans le document EP 1 865 200.

Il ressort de ce qui précède que la machine électrique tournante, telle qu'un alternateur, un alterno-démarreur ou un moteur électrique de véhicule automobile, est avantageusement du type polyphasé, par exemple du type triphasé, pentaphasé ou hexaphasé.

Le stator de la machine électrique tournante pourra comporter, de manière connue, un corps de stator doté de dents notamment pour montage de bobines concentriques. Ce corps de stator pourra comporter un nombre de dents supérieur au nombre d'aimants, par exemple 72 dents pour 24 bras 102. La longueur axiale du corps du stator pourra être inférieure à la longueur axiale des bras 102. Avantageusement le nombre de bras 102 est égal au moins à 10.

La présente invention permet de réduire le volume des aimants de l'ordre de 35 à 40% ainsi que les fuites de flux magnétique du fait notamment que le moyeu 12 est en matière amagnétique. Cela permet également de réduire les coûts, le poids du rotor et d'augmenter le diamètre interne. On pourra ne pas utiliser des aimants en terre rare, de simples aimants en ferrite étant suffisants. Le rotor à bras rapportés résiste bien à l'action de la force centrifuge.

Il ressort de la description et des dessins que le second flasque de pression 14 pourra être moins épais que le premier flasque de réaction 13 et le moyeu 12.

De manière précitée on appréciera que les bras segmentés 102 en combinaison avec le moyeu 12 mauvais conducteur de flux magnétique 12 permettent de réduire les fuites magnétiques et donc la masse du rotor. La masse de fer due à la présence des bras 102 est également réduite ce qui permet de diminuer le prix de la machine électrique.

## Revendications

1. Corps du rotor (11) de machine électrique tournante comportant :
- un premier flasque (13) de support portant un premier épaulement (15) en matière amagnétique,
- un second flasque de pression (14) en matière amagnétique,
- une partie magnétique (102) intercalée entre le premier flasque (13) et le second flasque (14),
- une âme centrale (12) portant la partie magnétique (102),
- des logements radiaux (113) ménagés dans la partie magnétique (102) ;
- des aimants permanents (114) montés dans les logements radiaux (113) de la partie magnétique (102) ;
- des moyens élastiques à action axiale (21) portés par le second flasque (14) pour action sur les aimants (114) ;
- des trous alignés (109) réalisés dans le premier épaulement (15), dans la partie magnétique (102) et dans le second flasque (14) de pression pour passage d'organes de fixation (209) - tels que de rivets, des boulons, des vis ou des goujons- pour serrage de la partie magnétique (102) entre le premier épaulement (15) et le second flasque de pression (14).

2. Corps du rotor (11) selon la revendication 1, dans lequel le second flasque (14) est moins épais que le premier flasque (13).

3. Corps de rotor (11) selon la revendication 1 ou 2, dans lequel le second flasque (14) est moins épais que l'âme centrale (12).

4. Corps de rotor (11) selon l'une quelconque des revendications précédentes, dans lequel les moyens élastiques à action axiale consistent en des pattes élastiques (21) de forme bombée ou dotées d'un pli en étant découpées dans le second flasque pour appui axial sur les aimants (114).

5. Corps de rotor (11) selon la revendication 4, dans lequel les pattes (21) sont d'orientation radiale.

6. Corps de rotor (11) selon l'une quelconque des revendications précédentes, dans lequel l'âme centrale (12) consiste un moyeu (12) en matière amagnétique porté par le premier flasque (13) et présentant une extrémité libre.

7. Corps de rotor (11) selon l'une quelconque des revendications précédentes, dans lequel la partie magnétique (102) consiste en des bras (102) en matière magnétique globalement d'orientation radiale et séparés les uns des autres par des fentes en étant implantés axialement entre le premier épaulement (15) et le second flasque (14).

8. Corps de rotor (11) selon la revendication précédentes, dans lequel les bras (102) consistent en un empilement de bras élémentaires en tôle.

9. Corps de rotor (11) selon la revendication 7 ou 8, dans lequel chaque bras (102) présente à sa périphérie externe des prolongements circonférentiels (105) s'étendant de part et d'autre du bras.

10. Corps de rotor (11) selon la revendication 9 prise en combinaison de la revendication 6, dans lequel des aimants permanents (114) sont montés dans les fentes séparant deux à deux les bras (102) et délimitant avec le moyeu (12) les logements (113) radiaux de montage des aimants (114).

11. Corps de rotor (11)) selon la revendication 10, dans lequel les fentes présentent, entre deux bras (102) adjacents et en dessous des rebords circonférentiels (105), des faces parallèles pour formation avec la périphérie externe du moyeu (12) des logements (113) radiaux de montage des aimants (114).

12. Corps de rotor (11) selon l'une quelconque des revendications 7 à 11 prises en combinaison avec la revendication 6, dans lequel une liaison mécanique intervient entre la périphérie interne des bras (102) et la périphérie externe du moyeu (12).

13. Corps de rotor (11) selon la revendication 12, dans lequel la liaison mécanique (16) est une liaison mécanique à queue d'aronde.

14. Corps de rotor (11) selon l'une quelconque des revendications précédentes prises en combinaison de la revendication 6, dans lequel le premier flasque (13) est d'un seul tenant avec le moyeu (12).

15. Corps de rotor (11) selon l'une quelconque des revendications 1 à 13 prises en combinaison avec la revendication 6, dans lequel le moyeu (12) est rapporté sur le premier flasque (13).

16. Corps de rotor (11) selon l'une quelconque des revendications précédentes, dans lequel le premier flasque (13) comporte à sa périphérie externe une collerette (17) configurée pour être fixée à l'un des composants d'un embrayage.

17. Corps de rotor (11) selon l'une quelconque des revendications précédentes, dans lequel le premier flasque (13) est prolongé vers l'intérieur par un rebord de fixation (19) configuré pour être lié en rotation à un arbre de rotor intermédiaire.

18. Corps de rotor (11) selon l'une quelconque des revendications précédentes, dans lequel les aimants (114) ont une forme globalement parallélépipédique.

19. Corps de rotor (11) selon l'une quelconque des revendications précédentes, dans lequel les aimants (114) sont des aimants sont en ferrite.

20. Corps de rotor (11) selon la revendication 19, dans lequel les aimants en ferrite appartiennent à des ensembles magnétiques comportant au moins une partie amagnétique et /ou un autre aimant.

21. Corps de rotor (11) selon l'une quelconque des revendications précédentes, dans lequel des moyens élastiques à action radiale (122, 222) interviennent entre l'âme centrale (12) et la périphérie interne des aimants (114).

22. Corps de rotor (11) selon la revendication 21, dans lequel les moyens élastiques à action radiale consistent en des languettes (222) d'orientation axiale et de forme bombée ou dotées d'au moins un plis issues de la périphérie interne du second flasque (14) pour contact local avec la périphérie interne des aimants (114).

23. Machine électrique tournante, notamment un alternateur, un alterno-démarreur ou un moteur électrique de véhicule automobile, comportant un corps de rotor (11) selon l'une quelconque des revendications précédentes.
